# FASCICULE DE BREVET EUROPEEN

(11) **EP 3 888 333 B1**
(45) Date de publication et mention de la délivrance du brevet: **05.07.2023**
(21) Numéro de dépôt: 19835708.9
(22) Date de dépôt: 29.11.2019
(51) Int. Cl.: H04L 41/5054, H04L 41/0897, H04W 76/22, H04L 67/51, H04L 67/60, H04W 16/04

(54) **ACTIVATION OU DÉSACTIVATION D'UN SOUS-ENSEMBLE VIRTUEL D'UN RÉSEAU DÉDIÉ À UN SERVICE POUR UN TERMINAL**
AKTIVIERUNG ODER DEAKTIVIERUNG EINER VIRTUELLEN UNTERBAUGRUPPE EINES BESTIMMTEN NETZWERKS ZU EINEM DIENST FÜR EIN TERMINAL
ACTIVATION OR DEACTIVATION, BY A TERMINAL, OF A VIRTUAL SUB-ASSEMBLY OF A NETWORK DEDICATED TO A SERVICE

(30) Priorité: 29.11.2018 FR 1872056
(43) Date de publication de la demande: 06.10.2021
(73) Titulaire: Orange, 75015 Paris (FR)
(72) Inventeur: GUIONNET, Chantal, 92326 CHÂTILLON CEDEX (FR); JUMPERTZ, Sylvie, 92326 CHÂTILLON CEDEX (FR); GUEGAN, Delphine, 92326 CHÂTILLON CEDEX (FR); BENGUIGUI, Catherine, 92326 CHÂTILLON CEDEX (FR)
(74) Mandataire: Plasseraud IP
(86) Numéro de dépôt international: PCT/FR2019/052848
(87) Numéro de publication internationale: WO 2020/109743

(56) Documents cités:
- WO-A1-2017/212162
- WO-A1-2019/043324
- US-A1- 2017 332 421
- US-A1- 2018 368 053

## Description

### Domaine technique

L'invention concerne le domaine des réseaux de télécommunication. En particulier, l'invention concerne le « Slicing 5G ».

### Technique antérieure

L'architecture des réseaux de télécommunication mobiles a jusqu'ici été standardisée. C'est en particulier le cas des réseaux mobiles dits « 2G », « 3G » et « 4G », dont les différentes architectures de réseau de télécommunication reposent traditionnellement sur des équipements bien spécifiques et dédiés à certaines fonctionnalités précises, que ce soit au niveau du réseau d'accès ou du coeur de réseau.

Le manque de flexibilité et d'évolutivité inhérent à ce type d'architecture conventionnelle a amené à envisager l'adoption d'architectures plus flexibles pour la prochaine génération de réseaux mobiles, dite « 5G », afin de pouvoir répondre rapidement à des demandes extrêmement diverses en terme de trafic ou de qualité de service.

La 5G est une nouvelle donne réseau de par sa convergence forte avec l'informatique. Sa conception a été pensée en s'appuyant sur le logiciel. Cela se traduit par une virtualisation de fonctions réseau, c'est-à-dire la réalisation par logiciel de capacités préalablement intégrées phyisuqment dans les infrastructures elles-mêmes). En pratique, deux conséquences directes dont un réseau « on demand », adaptable et pilotable à distance et en temps réel.

Cette flexibilité se traduit par un nouveau concept : le « Slice ». Cette solution repose sur une technique de découpage virtuel par tranche du réseau (« network slicing » en anglais).

Quand un client, par exemple un fournisseur de services, spécifiera son besoin réseau auprès de son opérateur, il fera une expression de ses besoins fonctionnels (QoS, coût, sécurité...) et ses besoins performance (débit, latences...). Le « Slice » est le réseau privé virtuel personnalisé répondant à cette expression de besoin.

C'est pourquoi, en 5G, on parle de 2 manières différentes de slices 5G :
1°) coté réseau, et
2°) coté clients (client - fournisseurs de service^

Le slice est un réseau privé virtuel. Aujourd'hui, les opérateurs sont capable physiquement de fournir des réseaux privés en les construisant avec infrastructure physique. La réalisation « virtuelle » du réseau privé est entendu coté client comme un équivalent service rendu.

Le concept de tranche du réseau est destiné à supporter des services de communication pour des besoins spécifiques, des utilisateurs spécifiques ou des terminaux spécifiques en appliquant des moyens adaptés de gestion de trafic. Une tranche du réseau comprend des valeurs de paramètres de configuration d'un réseau privé virtuel permettant de répondre aux exigences liées aux services à fournir. Les tranches du réseau déployées par un opérateur ne sont pas toutes composées des mêmes valeurs de paramètres réseau, voire des mêmes paramètres réseau, sachant que l'idée est d'adapter l'architecture et les tranches du réseau aux exigences d'usage lié à cette tranche du réseau. Une tranche du réseau permet ainsi de satisfaire la demande des utilisateurs suivant des critères fonctionnels, opérationnels et de performance différents, tels que le débit, la latence, le nombre de terminaux connectés, la couverture, le cout, etc.

A titre d'exemple, une tranche du réseau mise en oeuvre liée aux services loT (« Internet of Things » en anglais) pourra nécessiter de gérer un grand nombre de connexion de terminaux mais un débit associé à chaque terminal plutôt faible. Selon un autre exemple, un service proposé à une clientèle professionnelle nécessitera plutôt des paramètres avancés de sécurité et de disponibilité.

Le document US 2017/332421 divulgue un procédé de connection initiale d'un équipement utilisateur à une o plusieurs tranches du réseau, et l'assignation d'une nouvelle tranche du réseau à l'équipement utilisateur à sa demande.

Le document WO 2017/212162 décrit un système dans lequel une tranche de réseau est sélectionnée en fonction de paramètres inclus dans un terminal utilisateur et d'identifiants de tranche de réseau reçus.

Le document WO 2019/043324 décrit un procédé de taxation de données d'une application acheminées sur une tranche d'un réseau de communication.

Le document US 2018/368053 divulgue un procédé pour la génération d'un message de capacité de tranche de réseau et la transmission à un utilisateur.

Actuellement l'intelligence artificielle ne permet pas une adaptation complète et temps réel des tranches réseaux coté client. C'est pourquoi, il est prévu dans un premier temps, que les opérateurs construisent quelques modèles de tranches réseaux coté réseau (3-4) et que les clients utilisent l'un ou l'autre de ces modèles en fonction de leurs besoins.

Dans un second temps, il est envisagé que les modèles puissent être modifié partiellement et qu'en conséquence les tranches réseaux coté client puisse être adaptée en fonction des besoins pour déclencher les modifications partielles autorisées.

A terme, l'intelligence artificielle permettra une construction automatisée des tranches réseaux permettant une adaptation en temps réel de la tranche réseau coté client. On parle ici de tranche réseau dynamique, ou « dynamic 5G slicing » en anglais, par opposition au tranche réseau statique, ou « static 5G slicing » en anglais, prévu pour le lancement de la 5G. Dans le cas des tranches réseau statiques, un dispositif de gestion de réseau d'un fournisseur de service ou d'un client exprime ses besoins pour un service donné sous forme d'une tranche de réseau. Ainsi, le dispositif de gestion réseau effectue une allocation, aussi nommé assignation, de la tranche réseau au service. Le service mis en oeuvre utilise alors la tranche réseau allouée. Et, lorsque le service n'est pas mis en oeuvre la tranche réseau lui reste allouée impliquant une réservation de ressources non utilisées.

Un utilisateur peut souscrire à plusieurs services respectivement fournis par une pluralité de tranches du réseau. En fonction de ses besoins en terme de services, il peut souhaiter activer une tranche du réseau particulière correspondant de façon satisfaisante à son besoin actuel ou futur, pour se connecter éventuellement au réseau de télécommunication et accéder par la suite au service fourni par cette tranche du réseau. La tranche réseau dédiée à un service fera l'objet d'une allocation/assignation lors de la souscription de ce nouveau service, préalablement à l'activation de cette tranche réseau uniquement dans un contexte de potentielle utilisation du service.

Ainsi, l'activation d'une tranche réseau permet d'activer les ressources uniquement sur les périodes de temps où le service sera potentiellement utilisé.

### Problème technique

Il est connu d'effectuer une telle activation et/ou désactivation de tranches du réseau en fonction de données temporelles ou de calendrier prédéfinies, telles que le jour, l'heure ou plus généralement une date spécifique.

Toutefois, la situation d'un utilisateur est également susceptible d'évoluer en fonction d'autres données, notamment de données qui lui sont propres qui sont peu prévisibles à l'avance. L'activation et/ou désactivation automatique de tranches du réseau en fonction de données temporelles n'est alors pas satisfaisante pour permettre à l'utilisateur de bénéficier de la tranche du réseau la plus susceptible de lui fournir le service dont il a besoin.

La présente invention vise à résoudre, au moins partiellement, ces inconvénients. En particulier, l'invention vise l'activation ou désactivation d'une tranche du réseau, avantageusement de façon automatique, notamment en prenant en compte un changement de situation peu ou pas prévisible à l'avance, y compris un changement de situation externe au réseau lui-même.

### Exposé de l'invention

Il est proposé un procédé d'activation ou de désactivation pour un terminal d'un sous-ensemble virtuel d'un réseau de télécommunication selon la revendication 1.

Ainsi, l'activation de tranche réseau en fonction du contexte permet des économies de ressources au niveau du réseau car si aucune tranche réseau n'est activée utilisant un équipement de l'infrastructure réseau celui-ci pourrait être mis en veille et activer uniquement lors de l'activation d'une tranche réseau l'utilisant. Dans le cas de tranche réseau dynamique, l'assignation/allocation de tranche réseau à un service préalablement à son activation n'est pas obligatoire. Les deux étapes peuvent être réalisées en même temps favorisant ainsi le caractère dynamique des tranches réseau.

Selon une réalisation, une première tranche du réseau est préalablement activée pour le terminal avant la mise en oeuvre de l'étape a) du procédé, une deuxième tranche du réseau différente de la première tranche du réseau étant également activée lors de l'étape b) du procédé.

Selon une autre réalisation, une première tranche du réseau est préalablement activée pour le terminal avant la mise en oeuvre de l'étape a) du procédé, et la première tranche du réseau étant désactivée lors de l'étape b) du procédé.

Selon une autre réalisation, les tranches du réseau comprennent chacune des valeurs de paramètres différentes, les paramètres étant choisis parmi le débit, la couverture géographique, le nombre de terminaux connectés, le niveau de sécurité, le coût du service, la latence, la qualité de service et la fréquence utilisée par la tranche du réseau.

Selon une autre réalisation, la donnée de contexte est une donnée de géolocalisation de l'utilisateur

Selon une autre réalisation, la donnée de contexte est une donnée associée à une activité de l'utilisateur.

Selon une autre réalisation, la donnée de contexte est acquise de façon automatique lors de l'étape a) du procédé.

Il est également proposé un terminal pour l'activation et ou la désactivation d'un sous-ensemble virtuel d'un réseau de télécommunication dit « tranche du réseau », dédié à un service, le réseau de télécommunication comprenant une pluralité de tranches du réseau, le terminal comprenant :
- un lecteur de données de contexte adapté pour acquérir au moins une donnée de contexte d'un utilisateur, et
- un élément d'activation/désactivation adapté pour activer ou désactiver au moins une tranche du réseau parmi la pluralité de tranches du réseau en fonction de la donnée de contexte précédemment acquise.

Il est également proposé un dispositif de supervision d'accès pour l'activation et ou la désactivation d'un sous-ensemble virtuel d'un réseau de télécommunication selon la revendication 8.

Il est également proposé un programme d'ordinateur comprenant des instructions de code de programme pour l'exécution des étapes du procédé selon l'invention.

Il est également proposé un support d'enregistrement non transitoire lisible par un terminal sur lequel les instructions de code d'un programme d'ordinateur selon l'invention.

### Brève description des dessins

D'autres caractéristiques, détails et avantages de l'invention apparaîtront à la lecture de la description détaillée ci-après, et à l'analyse des dessins annexés, sur lesquels :
**Fig. 1**

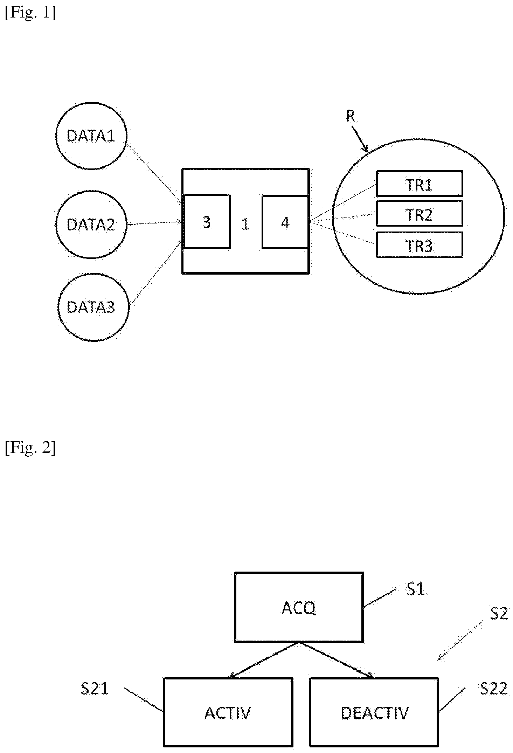

   [Fig. 1] est un schéma simplifié d'un terminal et d'un équipement d'accès associé à des première, deuxième et troisième tranches d'un réseau selon un premier mode de réalisation ;
**Fig. 2**
   [Fig. 2] est un schéma simplifié d'un procédé de activation et/ou désactivation d'une tranche du réseau de la [Fig. 1] ; et
**Fig. 3**

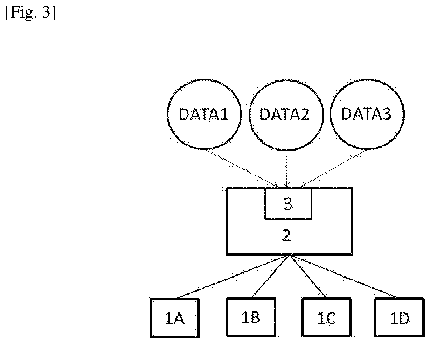

   [Fig. 3] est un schéma simplifié d'un dispositif d'accès à un réseau de télécommunication comprenant une interface de supervision selon un second mode de réalisation.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Par assignation ou allocation d'une tranche réseau à un service est entendu le fait lors de la souscription à un service, de déterminer une tranche réseau adaptée à être utilisé lors de la fourniture de ce service et l'assigner/allouer à l'équipement utilisateur pour ces prochaines utilisation du service.

Il est maintenant fait référence à la [Fig. 1] qui illustre de façon schématique un terminal 1 et un équipement d'accès associé un réseau de télécommunication R selon un premier mode de réalisation.

Par « terminal », on entend de façon large tout dispositif électronique ou informatique pouvant être connecté au réseau de télécommunication R, par exemple un serveur, un ordinateur, un téléphone portable, ou autre. Le terminal 1 peut lui-même être connecté à d'autres dispositifs électroniques ou informatiques.

Un opérateur du réseau de télécommunication R peut avantageusement utiliser des fonctions virtualisées pour mettre en oeuvre une pluralité de tranches sur une infrastructure de réseau physique unique.

Une telle technique de découpage par tranches du réseau permet ainsi à l'opérateur du réseau de télécommunication R de créer des réseaux « sur mesure », capables de fournir des solutions optimisées pour des besoins très variés avec des contraintes très diverses en terme de fonctionnalités et de performance.

Comme illustré sur la [Fig. 1], le réseau de télécommunication R peut mettre à disposition pour le terminal 1 une première tranche du réseau TR1, une deuxième tranche du réseau TR2 et une troisième tranche du réseau TR3. Toutefois, ce mode de réalisation n'est pas limitatif et le réseau de télécommunication R peut comprendre un nombre moins élevé, par exemple uniquement deux tranches, ou plus élevé de tranches du réseau.

Une ou plusieurs tranches du réseau TR1, TR2, TR3 peuvent ainsi être activées simultanément ou successivement pour le terminal 1.

Chaque tranche du réseau TR1, TR2, TR3 est adaptée pour fournir un service réseau spécifique à un utilisateur.

Ainsi, une tranche du réseau TR1, TR2, TR3 est associée à une pluralité de paramètres. Les valeurs des paramètres permettent de définir le service réseau fourni par chacune des tranches du réseau. Le nombre de paramètres peut en particulier varier en fonction des besoins de l'utilisateur.

Par « paramètre », on entend une variable susceptible d'influencer le service obtenu par l'utilisateur, et donc fourni par la tranche du réseau.

Selon une réalisation, un paramètre concerne une fonctionnalité technique de la tranche du réseau.

Un paramètre d'une tranche du réseau peut être choisi parmi le débit, la couverture géographique du service, le nombre de connexion possible, le niveau de sécurité, la latence, la qualité de service (« quality of service » en anglais) et la(les) fréquence(s) utilisée(s) par la tranche du réseau.

Selon une autre réalisation, un paramètre concerne une fonctionnalité opérationnelle ou de performance propre à l'utilisateur.

Un paramètre d'une tranche du réseau peut être choisi parmi divers exigences relatives au service fourni à l'utilisateur, telles que le coût du service pour l'utilisateur, l'impact énergétique du service, l'impact écologique, l'impact commercial attendu par l'utilisateur.

Ces exemples de paramètres ne sont pas limitatifs. En outre, un paramètre peut être choisi parmi une combinaison ou une fonction des paramètres indiqués ci-dessus ou encore d'autres paramètres non mentionnés.

Les tranches TR1, TR2, TR3 comportent au moins une, avantageusement plusieurs, valeurs de paramètres différentes en fonction du service respectivement fourni ou à fournir en utilisant ces tranches.

A titre d'exemple, dans le cas d'un service de consultation médicale à distance nécessitant l'utilisation d'outils de télémédecine, un médecin peut nécessiter des services différents en fonction de sa situation (en déplacement, en cabinet) ou du type de consultation à effectuer. Une tranche du réseau plus particulièrement adaptée parmi la pluralité de tranches du réseau peut ainsi être activée pour le terminal du médecin.

On décrit ainsi ci-après le procédé d'activation et/ou désactivation pour, ou à destination de, un terminal 1 d'une tranche du réseau, illustré par la [Fig. 2].

Une ou plusieurs tranches du réseau peuvent préalablement être activées pour le terminal 1. En variante, aucune tranche du réseau n'est préalablement activée pour le terminal 1 avant la mise en oeuvre du procédé selon l'invention.

Dans une première étape du procédé S1, on acquiert au moins une donnée de contexte. Avantageusement, on acquiert une pluralité de données de contexte DATA1, DATA2, DATA3.

La donnée de contexte peut être avantageusement acquise de façon automatique, c'est-à-dire sans transmission de la part de l'utilisateur lui-même. Il n'est en particulier pas nécessaire d'utiliser une interface homme/machine à cet effet.

La donnée de contexte peut être avantageusement acquise de façon périodique, par exemple toutes les heures, toutes les trente minutes, voire toutes les dix minutes, voire toutes les minutes.

La donnée de contexte peut également être avantageusement acquise en temps réel. Par « en temps réel », on entend notamment dès que la donnée de contexte est accessible ou déterminée.

Une donnée de contexte est avantageusement une donnée propre à l'utilisateur.

Selon une réalisation, la donnée de contexte est une donnée de géolocalisation. La donnée de géolocalisation peut notamment provenir d'un procédé de positionnement de l'utilisateur ou d'une autre personne, par exemple par GPS (« Global Positioning System » en anglais) ou par tout autre procédé.

A titre d'exemple, dans le cas d'un service de consultation médicale à distance par un médecin, la donnée de contexte peut permettre de déterminer si le médecin se trouve à son cabinet ou en déplacement à l'extérieur, ou encore de déterminer où se trouve le patient à examiner.

Selon une autre réalisation, la donnée de contexte est une donnée associée à une activité de l'utilisateur. La donnée associée à une activité peut provenir d'un agenda.

Plus particulièrement, la donnée de contexte peut être liée aux types de disponibilités, voire aux besoins de l'utilisateur. La donnée de contexte permet ainsi de distinguer entre plusieurs types d'activités de l'utilisateur. A titre d'exemple, la donnée de contexte peut indiquer si un rendez-vous de l'utilisateur est personnel ou professionnel, ou encore indiquer le type de rendez-vous professionnel attendu.

A titre d'exemple, dans le cas d'une consultation médicale à distance par un médecin, la donnée de contexte peut provenir de l'agenda professionnel du médecin, et peut permettre de déterminer si celui-ci doit effectuer une consultation prochainement ou au contraire, si celui-ci n'a pas de rendez-vous prévu.

En outre, si une consultation médicale est prévue, la donnée de contexte peut indiquer s'il s'agit d'une consultation médicale simple ou d'une consultation médicale de spécialité, nécessitant éventuellement des outils de médecine ou de télémédecine plus spécifiques et donc des besoins réseaux spécifiques.

Selon une autre réalisation, la donnée de contexte est une donnée associée aux dispositifs accessibles par le terminal 1.

Selon une autre réalisation, la donnée de contexte est une donnée indiquant une situation météorologique du lieu où se trouve le terminal 1.

Bien entendu, les réalisations concernant la donnée de contexte ne sont pas limitatives et d'autres données de contexte sont possibles.

Dans une seconde étape du procédé S2, on active ou désactive au moins une tranche du réseau parmi la pluralité de tranches du réseau TR1, TR2, TR3 en fonction de la donnée de contexte précédemment acquise.

Une fonction, appelée fonction de synchronisation, permet de déterminer quelle tranche du réseau doit être activée ou désactivée.

A cet effet, la fonction de synchronisation prend en compte les données de contexte précédemment acquises à l'étape S1, ainsi que d'autres données le cas échéant, telles que des données temporelles.

La fonction de synchronisation peut mettre en oeuvre un calcul algorithmique prédictif ou d'intelligence artificielle. En variante ou en combinaison, la fonction de synchronisation peut être paramétrée par l'utilisateur.

Ainsi, selon une réalisation, dans la seconde étape du procédé S2, au moins une tranche du réseau peut être activée (étape S21).

A titre d'exemple, dans le cas où la ou les données de contexte indiquent que le médecin a une consultation prévue prochainement et que celui-ci se trouve hors de son cabinet, il peut être utile d'activer une première tranche du réseau TR1 fournissant un service réseau adapté. La première tranche du réseau peut par exemple permettre au médecin d'obtenir une connexion satisfaisante (en terme de débit, de sécurité, ou autres) au réseau de télécommunication R bien qu'il se trouve en déplacement.

A l'inverse, dans le cas où la ou les données de contexte indiquent que le médecin a une consultation prévue prochainement mais que celui-ci se trouve à son cabinet, il peut être préférable d'activer une deuxième tranche du réseau TR2, différente de la première tranche du réseau TR1, et fournissant un service différent.

En outre, si l'agenda du médecin indique que celui-ci doit effectuer une consultation simple suivie d'une consultation de spécialité nécessitant l'utilisation d'outils de télémédecine à son cabinet, il peut être préférable d'activer la deuxième tranche pour la consultation simple et/puis d'activer une troisième tranche du réseau TR3, différente des première et deuxième tranches du réseau TR1, TR3, sur les horaires de la consultation de spécialité. La troisième tranche du réseau TR3 peut par exemple permettre au médecin d'utiliser en complément sur le même terminal 1 plusieurs dispositifs ou outils de télémédecine, ce qui n'est pas ou moins facilement possible, avec les deux autres tranches TR1, TR2.

Selon une réalisation, dans la seconde étape du procédé S2, au moins une tranche du réseau est désactivée (étape S22).

A titre d'exemple, lorsqu'une consultation de télémédecine est terminée, il peut être utile de désactiver une tranche du réseau car le service fourni par celle-ci n'est plus susceptible d'être utilisé par le médecin, au moins dans un avenir proche.

Selon un autre exemple, il peut être utile lors de la seconde étape du procédé S2, de désactiver une tranche du réseau et d'activer, simultanément ou successivement, une autre tranche du réseau.

On se réfère désormais plus particulièrement aux [Fig. 1] et [Fig. 3] qui illustrent les fonctions d'un terminal 1 ou d'un dispositif de supervision d'accès 2 configuré pour mettre en oeuvre les différentes étapes du procédé d'activation ou de désactivation tel que décrit ci-dessus respectivement selon deux modes de réalisation différents.

Selon le premier mode de réalisation, illustré par la [Fig. 1], le procédé d'activation ou de désactivation est directement mis en oeuvre par le terminal 1
A cet effet, le terminal 1 comprend un lecteur de données de contexte 3 adapté pour acquérir des données de contexte DATA1, DATA2, DATA3 selon la première étape S1 du procédé.

Le terminal 1 comprend en outre un élément d'activation/désactivation de tranche du réseau 4 adapté pour activer ou désactiver une tranche du réseau TR1, TR2, TR3 pour le terminal 1 selon la seconde étape S2 du procédé.

Selon le second mode de réalisation, illustré par la [Fig. 3], le procédé d'activation et/ou de désactivation est mis en oeuvre par un dispositif de supervision d'accès 2 au réseau de télécommunication R.

Le dispositif de supervision d'accès 2 est en communication, filaire ou sans fil, avec une pluralité de terminaux 1A, 1B, 1C, 1D.

La pluralité de terminaux 1A, 1B, 1C, 1D sont connectés au même réseau de télécommunication R comprenant les tranches du réseau.

Selon ce second mode de réalisation, l'activation ou la désactivation de tranches du réseau pour les terminaux 1A, 1B, 1C, 1D est supervisée par le dispositif de supervision d'accès 2.

A cet effet, le dispositif de supervision d'accès 2 peut comprendre un lecteur de données de contexte 3 tel que décrit ci-dessus dans le premier mode de réalisation pour mettre en oeuvre la première étape S1 du procédé.

L'activation ou la désactivation d'une tranche du réseau pour chacun des terminaux 1A, 1B, 1C, 1D peut ainsi être commandée par le dispositif de supervision d'accès 2.

La même tranche ou des tranches du réseau différentes peuvent être activées sur les différents terminaux 1A, 1B, 1C, 1D. A cet effet, un élément d'activation/désactivation peut être prévu au niveau du dispositif de supervision d'accès 2 ou de chaque terminal 1A, 1B, 1C, 1D.

L'invention n'est pas limitée aux exemples de réalisation ci-dessus décrits et représentés, à partir desquels on pourra prévoir d'autres modes et d'autres formes de réalisation, sans pour autant sortir du cadre de l'invention.

### Avantages

**L'activation/désactivation permet que tant que la tranche réseau n'est pas activée, elle ne sollicite aucun équipement du réseau. Ainsi, si ces équipements sont équipés d'une fonction de mise en veille, ils pourront basculer en veille et économiser les ressources du réseau tant qu'ils ne sont pas utiliser.**

Comme déjà indiqué ci-dessus, il est ainsi possible de proposer à l'utilisateur un service réseau fourni par une tranche du réseau adapté à ses besoins actuels ou futurs, ce qui permet une meilleure utilisation des ressources du réseau de télécommunication R au cours du temps et une optimisation des couts associés pour l'utilisateur.

L'acquisition automatique des données de contexte simplifie la gestion du réseau de télécommunication, l'utilisateur n'ayant pas à effectuer lui-même les démarches nécessaires pour activer ou désactiver une tranche du réseau.

Etant donné que les données de contexte sont avantageusement acquises en temps réel, la tranche du réseau, et donc le service fourni à l'utilisateur, est adaptée au cours du temps.

## Revendications

1. Procédé d'activation ou de désactivation pour un terminal (1) d'un sous-ensemble virtuel d'un réseau de télécommunication (R) dit « tranche du réseau », dédié à un service, le réseau de télécommunication (R) comprenant une pluralité de tranches du réseau (TR1, TR2, TR3), ledit terminal (1) étant connecté audit réseau de télécommunication (R), et au moins une première tranche est préalablement activée pour le terminal (1), le procédé comprenant au moins les étapes suivantes :
a) une étape d'acquisition d'au moins une donnée de contexte d'un utilisateur, et
b) une étape d'activation ou de désactivation d'au moins un tranche du réseau parmi la pluralité de tranches du réseau (TR1, TR2, TR3) en fonction de la donnée de contexte précédemment acquise, et
dans lequel la première tranche du réseau est désactivée lors de l'étape b) du procédé.

2. Procédé selon la revendication 1, dans lequel une première tranche du réseau est préalablement activée pour le terminal avant la mise en oeuvre de l'étape a) du procédé, et dans lequel une deuxième tranche du réseau différente de la première tranche du réseau est également activée lors de l'étape b) du procédé.

3. Procédé selon l'une quelconque des revendications précédentes, dans lequel les tranches du réseau comprennent chacune des valeurs de paramètres différentes, les paramètres étant choisis parmi le débit, la couverture géographique, le nombre de terminaux connectés, le niveau de sécurité, le coût du service, la latence, la qualité de service et la fréquence utilisée par la tranche du réseau.

4. Procédé selon l'une quelconque des revendications précédentes, dans lequel la donnée de contexte est une donnée de géolocalisation de l'utilisateur

5. Procédé selon l'une quelconque des revendications précédentes, dans lequel la donnée de contexte est une donnée associée à une activité de l'utilisateur.

6. Procédé selon l'une quelconque des revendications précédentes, dans lequel la donnée de contexte est acquise de façon automatique lors de l'étape a) du procédé.

7. Terminal (1) pour l'activation et ou la désactivation d'un sous-ensemble virtuel d'un réseau de télécommunication (R) dit « tranche du réseau », dédié à un service, le réseau de télécommunication (R) comprenant une pluralité de tranches du réseau (TR1, TR2, TR3), le terminal (1) comprenant :
- un lecteur de données de contexte (3) adapté pour acquérir au moins une donnée de contexte d'un utilisateur, et
- un élément d'activation/désactivation (4) adapté pour activer ou désactiver au moins une tranche du réseau parmi la pluralité de tranches du réseau (TR1, TR2, TR3) en fonction de la donnée de contexte précédemment acquise.

8. Dispositif de supervision d'accès (2) pour l'activation et ou la désactivation d'un sous-ensemble virtuel d'un réseau de télécommunication (R) dit « tranche du réseau », dédié à un service, le réseau de télécommunication (R) comprenant une pluralité de tranche du réseau (TR1, TR2, TR3), le dispositif de supervision d'accès (2) étant en communication avec une pluralité de terminaux (1A, 1B, 1C 1D), et au moins une première tranche est préalablement activée pour la pluralité de terminaux, le dispositif de supervision d'accès (2) comprenant un lecteur de données de contexte (3) adapté pour acquérir au moins une donnée de contexte d'un utilisateur, le dispositif de supervision d'accès (2) étant configuré pour activer ou désactiver une tranche du réseau pour la pluralité de terminaux (1A, 1B, 1C 1D) en fonction de la donnée de contexte précédemment acquise, et dans lequel la première tranche du réseau est désactivée pour la pluralité de terminaux en fonction de la donnée de contexte précédemment acquise.

9. Programme d'ordinateur comprenant des instructions de code de programme pour l'exécution des étapes du procédé selon l'une quelconque des revendications 1 à 6.

10. Support d'enregistrement non transitoire lisible par un terminal sur lequel les instructions de code d'un programme d'ordinateur selon la revendication 9 sont stockées.

## Patentansprüche

1. Verfahren zur Aktivierung oder Deaktivierung für ein Endgerät (1) einer virtuellen Teileinheit eines Telekommunikationsnetzwerks (R), "Network-Slice" genannt, die für einen Dienst bestimmt ist, wobei das Telekommunikationsnetzwerk (R) eine Vielzahl von Network-Slices (TR1, TR2, TR3) enthält, wobei das Endgerät (1) mit dem Telekommunikationsnetzwerk (R) verbunden ist, und mindestens ein erster Slice vorab für das Endgerät (1) aktiviert wird, wobei das Verfahren mindestens die folgenden Schritte enthält:
a) einen Schritt der Erfassung mindestens eines Kontextdatenwerts eines Benutzers, und
b) einen Schritt der Aktivierung oder der Deaktivierung mindestens eines Network-Slices unter der Vielzahl von Network-Slices (TR1, TR2, TR3) abhängig vom vorher erfassten Kontextdatenwert, und
wobei der erste Network-Slice im Schritt b) des Verfahrens deaktiviert wird.

2. Verfahren nach Anspruch 1, wobei ein erster Network-Slice vor der Durchführung des Schritts a) des Verfahrens für das Endgerät aktiviert wird, und wobei ein zweiter Network-Slice anders als der erste Network-Slice ebenfalls im Schritt b) des Verfahrens aktiviert wird.

3. Verfahren nach einem der vorhergehenden Ansprüche, wobei die Network-Slices je unterschiedliche Parameterwerte enthalten, wobei die Parameter ausgewählt werden unter der Übertragungsrate, der geographischen Abdeckung, der Anzahl von verbundenen Endgeräten, dem Sicherheitsniveau, den Kostens des Diensts, der Latenz, der Dienstqualität und der vom Network-Slice verwendeten Frequenz.

4. Verfahren nach einem der vorhergehenden Ansprüche, wobei der Kontextdatenwert ein Geolokalisationsdatenwert des Benutzers ist.

5. Verfahren nach einem der vorhergehenden Ansprüche, wobei der Kontextdatenwert ein einer Aktivität des Benutzers zugeordneter Datenwert ist.

6. Verfahren nach einem der vorhergehenden Ansprüche, wobei der Kontextdatenwert im Schritt a) des Verfahrens automatisch erfasst wird.

7. Endgerät (1) zur Aktivierung und/oder zur Deaktivierung einer virtuellen Teileinheit eines Telekommunikationsnetzwerks (R), "Network-Slice" genannt, die für einen Dienst bestimmt ist, wobei das Telekommunikationsnetzwerk (R) eine Vielzahl von Network-Slices (TR1, TR2, TR3) enthält, wobei das Endgerät (1) enthält:
- einen Kontextdatenleser (3), der geeignet ist, mindestens einen Kontextdatenwert eines Benutzers zu erfassen, und
- ein Aktivierungs-/Deaktivierungselement (4), das geeignet ist, mindestens einen Network-Slice unter der Vielzahl von Network-Slices (TR1, TR2, TR3) abhängig vom vorher erfassten Kontextdatenwert zu aktivieren oder zu deaktivieren.

8. Zugangsüberwachungsvorrichtung (2) für die Aktivierung und/oder die Deaktivierung einer virtuellen Teileinheit eines Telekommunikationsnetzwerks (R), "Network-Slice" genannt, die für einen Dienst bestimmt ist, wobei das Telekommunikationsnetzwerk (R) eine Vielzahl von Network-Slices (TR1, TR2, TR3) enthält, wobei die Zugangsüberwachungsvorrichtung (2) mit einer Vielzahl von Endgeräten (1A, 1B, 1C, 1D) in Kommunikation ist, und mindestens ein erster Slice vorher für die Vielzahl von Endgeräten aktiviert wird, wobei die Zugangsüberwachungsvorrichtung (2) einen Kontextdatenleser (3) enthält, der geeignet ist, mindestens einen Kontextdatenwert eines Benutzers zu erfassen, wobei die Zugangsüberwachungsvorrichtung (2) konfiguriert ist, einen Network-Slice für die Vielzahl von Endgeräten (1A, 1B, 1C, 1D) abhängig vom vorher erfassten Kontextdatenwert zu aktivieren oder zu deaktivieren, und wobei der erste Network-Slice für die Vielzahl von Endgeräten abhängig vom vorher erfassten Kontextdatenwert deaktiviert wird.

9. Computerprogramm, das Programmcodeanweisungen zur Ausführung der Schritte des Verfahrens nach einem der Ansprüche 1 bis 6 enthält.

10. Nichtflüchtiger Aufzeichnungsträger, der von einem Endgerät lesbar ist, auf dem die Computerprogrammcodeanweisungen nach Anspruch 9 gespeichert sind.

## Claims

1. Activation or deactivation method for a terminal (1) of a virtual subset of a telecommunication network (R), called "network slice", dedicated to a service, the telecommunication network (R) comprising a plurality of network slices (TR1, TR2, TR3), said terminal (1) being connected to said telecommunication network (R), and at least one first slice is previously activated for the terminal (1), the method comprising at least the following steps:
a) a step of acquisition of at least one context data of a user, and
b) a step of activation or of deactivation of at least one network slice out of the plurality of network slices (TR1, TR2, TR3) based on the context data previously acquired, and
wherein the first network slice is deactivated in the step b) of the method.

2. Method according to Claim 1, wherein a first network slice is previously activated for the terminal before the implementation of the step a) of the method, and wherein a second network slice different from the first network slice is also activated in the step b) of the method.

3. Method according to either one of the preceding claims, wherein the network slices each comprise different parameter values, the parameters being chosen from among the bitrate, the geographic coverage, the number of terminals connected, the level of security, the cost of the service, the latency, the quality of service and the frequency used by the slice of the network.

4. Method according to any one of the preceding claims, wherein the context data is a geolocation data of the user.

5. Method according to any one of the preceding claims, wherein the context data is a data associated with an activity of the user.

6. Method according to any one of the preceding claims, wherein the context data is acquired automatically in the step a) of the method.

7. Terminal (1) for the activation and/or the deactivation of a virtual subset of a telecommunication network (R), called "slice of the network" dedicated to a service, the telecommunication network (R) comprising a plurality of network slices (TR1, TR2, TR3), the terminal (1) comprising:
- a context data reader (3) suitable for acquiring at least one context data of a user, and
- an activation/deactivation element (4) suitable for activating or deactivating at least one network slice out of the plurality of network slices (TR1, TR2, TR3) based on the context data previously acquired.

8. Access supervision device (2) for the activation and/or the deactivation of a virtual subset of a telecommunication network (R), called "slice of the network" dedicated to a service, the telecommunication network (R) comprising a plurality of network slices (TR1, TR2, TR3), the access supervision device (2) being in communication with a plurality of terminals (1A, 1B, 1C, 1D), and at least one first slice is previously activated for the plurality of terminals, the access supervision device (2) comprising a context data reader (3) suitable for acquiring at least one context data of a user, the access supervision device (2) being configured to activate or deactivate a network slice for the plurality of terminals (1A, 1B, 1C, 1D) based on the context data previously acquired, and wherein the first network slice is deactivated for the plurality of terminals based on the context data previously acquired.

9. Computer program comprising program code instructions for the execution of the steps of the method according to any one of Claims 1 to 6.

10. Non-transient storage medium that can be read by a terminal on which the code instructions of a computer program according to Claim 9 are stored.
